# EUROPEAN PATENT SPECIFICATION

(11) **EP 4 225 088 B1**
(45) Date of publication and mention of the grant of the patent: **15.04.2026**
(21) Application number: 21786954.4
(22) Date of filing: 05.10.2021
(51) Int. Cl.: A24F 40/485, A24F 40/20

(54) **AEROSOL GENERATING DEVICE**
AEROSOLERZEUGUNGSVORRICHTUNG
DISPOSITIF DE GÉNÉRATION D'AÉROSOL

(30) Priority: 08.10.2020 EP 20200902
(43) Date of publication of application: 16.08.2023
(73) Proprietor: JT International SA, 1202 Geneva (CH)
(72) Inventor: WRIGHT, Alec, Guildford Surrey GU2 7SU (GB); ROGAN, Andrew Robert John, Moray Aberdeenshire IV36 2ZH (GB)
(74) Representative: Gill Jennings & Every LLP
(86) International application number: PCT/EP2021/077468
(87) International publication number: WO 2022/074012

(56) References cited:
- WO-A1-2016/126544
- US-A1- 2015 313 287
- US-A1- 2015 351 457

## Description

The present invention relates to an aerosol generating device. The disclosure is particularly applicable to a portable aerosol generation device, which may be self-contained and low temperature. Such devices may heat, rather than burn, tobacco or other suitable aerosol substrate materials by conduction, convection, and/or radiation, to generate an aerosol for inhalation.

The popularity and use of reduced-risk or modified-risk devices (also known as vaporisers) has grown rapidly in the past few years as an aid to assist habitual smokers wishing to quit using traditional tobacco products such as cigarettes, cigars, cigarillos, and rolling tobacco. Various devices and systems are available that heat or warm aerosolisable substances as opposed to burning tobacco in conventional tobacco products.

US 2015/351457 A1 discloses an electronic cigarette and a method for adjusting flow rate of gas flow of the electronic cigarette.

A commonly available reduced-risk or modified-risk device is the heated substrate aerosol generation device or heat-not-burn (HNB) device. Devices of this type generate an aerosol or vapour by heating an aerosol substrate (i.e. consumable) that typically comprises moist leaf tobacco or other suitable aerosolisable material to a temperature typically in the range 150°C to 300°C. Heating an aerosol substrate, but not combusting or burning it, releases an aerosol that comprises the components sought by the user but not the toxic and carcinogenic by-products of combustion and burning. In addition, the aerosol produced by heating the tobacco or other aersolisable material does not typically comprise the burnt or bitter taste that may result from combustion that can be unpleasant for the user.

However, within such devices, a known issue is that the user experience does not entirely mimic that of a cigarette. In particular, HNB devices are known to provide a different inhalation experience to that offered by traditional tobacco products such as cigarettes.

Moreover, it is desirable to provide greater flexibility in the ventilation of the aerosol substrate. This would allow for more precise tailoring of the aersolisation properties of the device and the inhalation experience provided to the user.

An object of the present invention is to address one or more of these issues.

According to an aspect of the invention, there is provided an aerosol generating device as set out in appended claim 1, comprising: a housing; a heating chamber arranged to receive an aerosol substrate, the heating chamber operable to heat the aerosol substrate to generate an aerosol; and a first airflow passage arranged to transport air from a first air inlet in the housing into or through the aerosol generating device, wherein the first airflow passage comprises a valve having an aperture, and wherein a size of the aperture is adjustable to alter an airflow through the first airflow passage.

In this way, the pressure drop of the aerosol generating device may be adjusted as required by increasing or decreasing the size of the aperture. In particular, the size of the aperture may be adjusted over a continuous range. This differs from known devices, where the pressure drop is typically fixed by the dimensions of the air inlet. Thus, greater flexibility is provided with regard to the control of the aerosol generating properties of the device, and the pressure drop may be adjusted during an aerosol generating session to more closely mimic the behaviour of traditional tobacco products such as cigarettes.

Preferably, the valve is configured to adjust the size of the aperture as a function of temperature. In this way, the pressure drop may be adjusted in response to a change in temperature. Thus, the pressure drop may be varied during the aerosol generating session (e.g. without requiring user input), and the size of the aperture, and thus the pressure drop, may be configured to vary in a manner which replicates the behaviour of traditional tobacco products. Moreover, by providing a valve with an aperture which varies in size as a function of temperature, air may be induced into the aerosol generating system under certain conditions. For example, in a HNB device or other tobacco-vapour device, the first three puffs (inhalations by the user) are typically hot due to the presence of water within the tobacco. By configuring the valve to adjust the aperture so that it has a larger opening area at higher temperatures, and a smaller opening area at lower temperatures, a higher flow rate of air is able to enter the system at higher temperatures, which is able to mix with the hot vapour during generated the initial (e.g. three) puffs of the device.

Preferably, the valve is configured such that the aperture is always at least partially open. In this way, the valve is configured to adjust the size of the aperture to vary the pressure drop, but the size of the aperture always remains greater than zero, i.e. the aperture is never fully closed. Hence, the aerosol generating device is always ventilated via the first airflow passage but the level of ventilation may be adjusted using the valve.

Preferably, the valve is configured such that the aperture closes below a threshold temperature. In this way, air is prevented from entering the aerosol generating device via the first airflow passage below the threshold temperature. For example, the threshold temperature may be selected or defined such that the valve is configured to only allow air into the device during the initial three puffs of the aerosol substrate by the user.

Preferably, the valve comprises a shape memory alloy in which the aperture is located, the shape memory alloy being configured to change shape as a function of temperature to adjust the size of the aperture. Preferably, the shape memory alloy is a two-way shape memory alloy. In one example, the size of the aperture may be increased and/or decreased by providing a controlled supply of heat to the shape memory alloy. In another example, the size of the aperture may be automatically adjusted as a function of the temperature of the device (i.e. as a function of the general heating effect from the heating chamber), without requiring user input.

Preferably, the valve comprises a flexible rim surrounding the shape memory alloy, the flexible rim being configured to expand or contract to accommodate the change in shape of the shape memory alloy. For example, the flexible rim may be a diaphragm or rubber element (e.g. silicone) which is associated with the shape memory alloy. In this way, a valve is provided which allows for sensitive adjustment of the airflow into the aerosol generating device by the adjustment of the size of the aperture over a continuous range. Moreover, the flexible rim is able to accommodate the stresses and strains resulting from the shape change of the shape memory alloy.

Preferably, the aperture is circular, and the radius of the aperture is adjustable to alter the airflow through the first airflow passage.

Preferably, the valve is located at the first air inlet.

Preferably, the first air inlet is located at an insertion opening for the aerosol substrate.

Preferably, the first airflow passage is arranged to transport air from the first air inlet in the housing to the heating chamber. In this way, by adjusting the size of the aperture, ventilation of the aerosol substrate in the heating chamber may be adjusted.

Preferably, the first airflow passage is arranged to transport air from the first air inlet in the housing through the aerosol generating device to mix with aerosol emerging from the heating chamber. In some examples of the invention, the aerosol generating device may comprise a vapour passage arranged to carry an aerosol generated in the chamber from the chamber to an inhalation outlet, wherein the first airflow passage is arranged to connect the first air inlet to the vapour passage such that air from the first air inlet in the housing mixes with aerosol emerging from the heating chamber in the vapour passage. In some examples, the aerosol generating device may comprise a mouthpiece and the vapour passage and inhalation outlet are provided in the mouthpiece.

Preferably, the aerosol generating device further comprises a second air flow passage arranged to transport air from a second air inlet in the housing to the heating chamber. In this way, the first airflow passage may act as a subsidiary air flow passage, which enables additional air to be transported into the aerosol generating device as required. For example, the first airflow passage may only transport air into the aerosol generating device (i.e. the valve is open) at high temperatures during an initial stage (e.g. three initial puffs) of an aerosol generating session, whereas the second airflow passage may be configured to transport air into the aerosol generating device across all temperatures.

Preferably, the aerosol generating device further comprises an actuator, wherein the size of the aperture is adjustable by the actuator.

Preferably, the actuator comprises one of: a magnetic actuator; an electrical actuator; or an electro-mechanical actuator.

Embodiments of the invention are now described, by way of example, with reference to the drawings, in which:
Figure 1 is a schematic cross-sectional view of an aerosol generating device in an embodiment of the invention;
Figure 2A is a schematic side-view of the aerosol generating device comprising a valve with an aperture having a first size;
Figure 2B is schematic side-view of the aerosol generating device comprising the valve with the aperture having a second size;
Figures 3A and 3B are schematic diagrams illustrating a specific embodiment of the valve in a first and a second position respectively;
Figure 4 is a schematic cross-sectional view of an aerosol generating device in another embodiment of the invention;
Figure 5A is a schematic cross-sectional view of an aerosol generating device in another embodiment of the invention; and
Figure 5B is another schematic cross-sectional view of the aerosol generating device in a plane perpendicular to the view in Figure 5B.

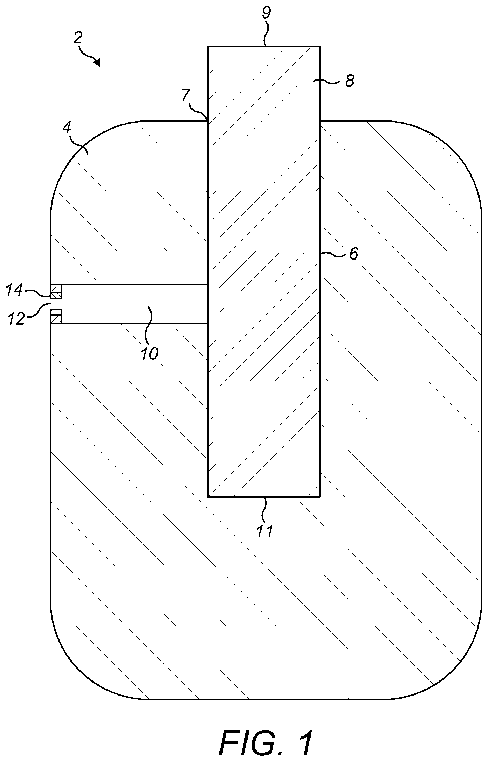

Figure 1 illustrates an aerosol generating device 2 according to an embodiment of the invention, comprising a housing 4 and a heating chamber 6 for receiving an aerosol substrate 8 (e.g. a consumable). The aerosol substrate 8 comprises a first end 9 that is mouth-end and an opposite second end 11. The heating chamber 6 is operable to heat the aerosol substrate 8 to generate an aerosol (also referred to as a vapour) for inhalation by a user.

In this example, the heating chamber 6 is tubular and is configured for receiving a rod of aerosol substrate 8, such as a cylindrical rod of tobacco or other aerosol generating material. In use, the user may insert the aerosol substrate 8 through an insertion opening 7 in the housing 4 such that an aerosolisable part of the aerosol substrate 8 is positioned within the heating chamber 6. The length of the heating chamber 6 is shorter than the length of the rod of aerosol substrate 8 such that a portion of the aerosol substrate 8, in particular the filtering mouth-end 9, protrudes through the insertion opening 7 in the housing 4 (i.e. out of the heating chamber 6) and can be received in the mouth of the user.

The skilled person will appreciate that, in alternative embodiments, the heating chamber 6 may not be tubular. For example, the heating chamber 6 may be formed as a cuboidal, conical, hemi-spherical or other shaped cavity, and be configured to receive a complementary shaped aerosol substrate 8.

The heating chamber 6 comprises one or more heating elements (not depicted) comprising a heating material suitable for converting electrical energy into heat (such as stainless steel, titanium, nickel, Nichrome etc.). In use, power may be supplied to the one or more heating elements from a power source such as a battery (not depicted) such that the temperature of the one or more heating elements increases and heat energy is transferred to the aerosol substrate 8 to produce an aerosol for inhalation by the user. In one example, the heating chamber 6 may comprise a thin film heating element which surrounds the aerosol substrate 8 and defines a wall of the heating chamber 6 or is affixed onto an outer wall of heating element.

A first airflow passage 10 extends from an air inlet 12 in the exterior of the housing 4 to the heating chamber 6. The first airflow passage is arranged to transport air from the external environment, through the air inlet 12, to the heating chamber 6. Hence, the airflow passage 10 transports air and ventilates the aerosol substrate 8 received within the heating chamber 6.

In one example, the first airflow passage 10 may be the only channel for supplying air into the heating chamber 6, other than the insertion opening 7 through which the aerosol substrate 8 is received. In another example, the aerosol generating device 2 may comprise a second airflow passage (not depicted) arranged to transport air from a second air inlet in the housing to the heating chamber 6. In this case, the first airflow passage 10 may act as a subsidiary channel which transports air into the aerosol generating device 2 if required. For example, the first airflow passage 10 may be configured to only allow air into the aerosol generating device 2 at high temperatures, such as during an initial period of the aerosol generating session, whereas the second airflow passage may be configured to remain open at all times.

The first airflow passage 10 comprises a valve 14 (i.e. an adjustable opening member) configured to control the flow of air through the first airflow passage 10 and into the heating chamber 6. In this example, the valve 14 is located at the air inlet 12 in the housing 4, but the skilled person will appreciate that the valve 14 may be located at alternative positions along the length of the first airflow passage 10.

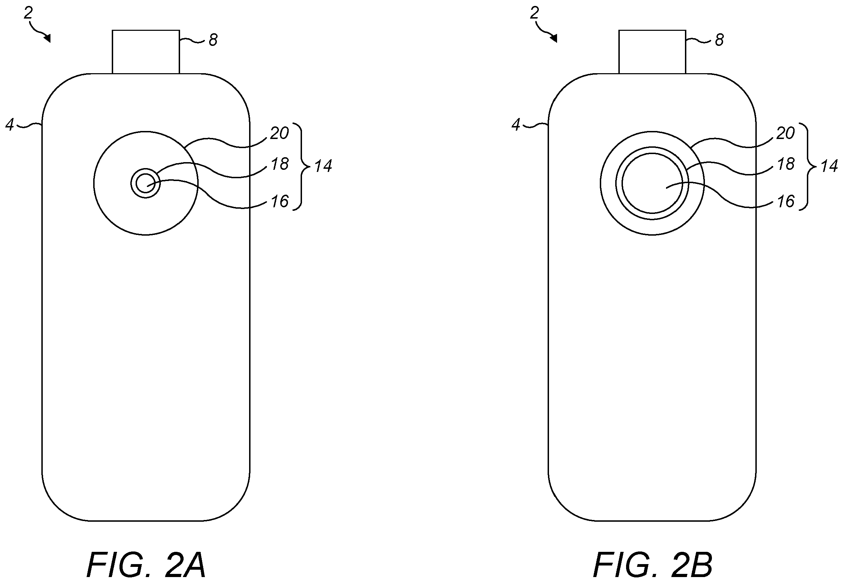

As further illustrated in Figures 2A and 2B, the valve 14 comprises an aperture 16 (i.e. opening, hole). The size of the aperture 16 may be controlled to adjust the flow of air into and along the first airflow passage 10, and into the heating chamber 6.

For example, the size of the aperture 16 may be increased from a first size (as seen in Figure 2A) to a second size (as seen Figure 2B) to increase the flow of air into the heating chamber 6 and to the aerosol substrate 8, thereby decreasing the pressure drop. Conversely, the size of the aperture 16 may be decreased from the second size (as seen in Figure 2A) to the first size (as seen Figure 2B) to decrease the flow of air into the heating chamber 6 and to the aerosol substrate 8, thereby increasing the pressure drop. The skilled person will appreciate that the sizes of the aperture 16 depicted in Figures 2A and 2B serve only as an illustration, and the aperture 16 may be controlled to vary across a continuous range of sizes, such that the pressure drop may be precisely controlled by varying the size of the aperture 16.

In this example, the aperture 16 is circular and the radius of the aperture 16 is varied to alter the cross-section of valve 14. It will be appreciated, however, that the aperture 16 may be formed in alternative shapes, such as a triangle, oval, or rectangle.

The valve 14 further comprises an actuable element 18 in which the aperture 16 is located, i.e. the actuable element 18 defines a hole corresponding to the aperture 16 in the valve 14. In particular, in this example, the actuable element 18 is formed in a ring shape (e.g. donut, torus). The actuatable element may be necessarily formed in a continuous ring but also be also be formed from a pair of half-circle portions.

The actuable element 18 comprises a shape memory alloy, and preferably a two-way shape memory alloy. For example, the actuable element 18 may comprise Ni-Ti, Cu-Al-Ni, Cu-Zn-Al or another suitable shape memory alloy. The shape memory alloy exhibits the shape memory effect such that it deforms (i.e. undergoes a phase transformation) as a function of temperature to adjust the size of the aperture 16 defined by the actuable element 18.

In one example, the temperature of the actuable element 18 may be varied by adjusting a controlled supply of heat to the actuable element 18. For example, the supply of heat to the actuable element 18 may be controlled using an electronic controller. Advantageously, this allows the size of the aperture 16 to be precisely controlled. As the pressure drop within the aerosol generating device 2 depends on the size of the aperture 16, the supply of heat may be automatically controlled such that the pressure drop during the aerosol generating session mimics the pressure drop within traditional tobacco products. Alternatively or additionally, the user may be able to manually control the supply of heat to the actuable element 18. This may be achieved using, for example, mechanical means (e.g. a slider, solenoid) and/or be triggered by electronic means (e.g. buttons, touchscreen etc.). Thus, the user is able to control the pressure drop during the aerosol generating session to suit their personal preference.

In another example, the temperature of the actuable element 18 may vary in accordance with the (indirect) heating provided by the heating chamber 6.

The first size of aperture 16 (depicted in Figure 2A) may correspond to a state where the actuable element 18 has not been heated (e.g. the actuable element 18 is at room temperature). The second size of aperture 16 (depicted in Figure 2B) may correspond to a state where the actuable element 18 has been heated, either using a controlled supply of heat or by indirect heating from the heating chamber 6. Again, the skilled person will appreciate that the first and second sizes of aperture 16 are not intended to be limiting, and the size of the aperture 16 may be configured to continuously vary across a continuous temperature range.

Advantageously, by increasing the size of the aperture 16 in response to an increase in temperature, the volumetric flow rate into the heating chamber 6 may be increased as the temperature increases. Hence, a greater flow rate of cool air may be supplied to the aerosol substrate 8 during a high temperature period of an aerosol generating session, e.g. during the initial few (e.g. three) puffs (inhalations by the user) of the aerosol substrate 6 which are typically hot due to residual water present within the aerosol generating material (e.g. tobacco). Conversely, by decreasing the size of the aperture 16 in response to a decrease in temperature, the volumetric flow rate into the heating chamber 6 may be decreased as the temperature decreases.

The actuable element 18 is configured to adjust the size of the aperture 16 across a continuous range, i.e. the aperture 16 is not limited to switching between just two sizes of aperture 16. In one embodiment, the aperture 16 may be configured to always remain at least partially open, such that airflow into the heating chamber 6 (via the first airflow passage 10) is never entirely closed off. In an alternative embodiment, the actuable element 18 may be configured to close the aperture 16 below a threshold temperature such that airflow into the heating chamber 6 (via the first airflow passage 10) is blocked below the threshold temperature.

The valve 14 further comprises a flexible rim 20 which surrounds the actuable element 18. The flexible rim 20 acts as a diaphragm which connects the actuable element 18 to the housing 4 and is operable to accommodate the shape change of the shape memory element 18. For example, as the temperature increases and the actuable element 18 expands, the flexible rim 20 will be compressed. Conversely, as the temperature decreases and the actuable element 18 contracts, the flexible rim 20 will be decompressed. In other words, as the actuable element 18 is attached to the flexible rim 20, movement (deformation) of the actuable element 18 is facilitated by movement of the flexible rim 20. Advantageously, this means that the housing 4 in which the valve 12 is located is not stressed by movement of the actuable element 18. The flexible rim 20 may comprise an elastomeric material, such as (high temperature resistant) silicone rubber.

In alternative embodiments, the actuable element 18 may not comprise a shape memory alloy. Instead, the actuable element 18 may be actuated, moved or deformed by an actuator (not depicted) to adjust the size of the aperture 16. For example, the actuator may be a magnetic, electrical or electro-mechanical (e.g. solenoid) actuator.

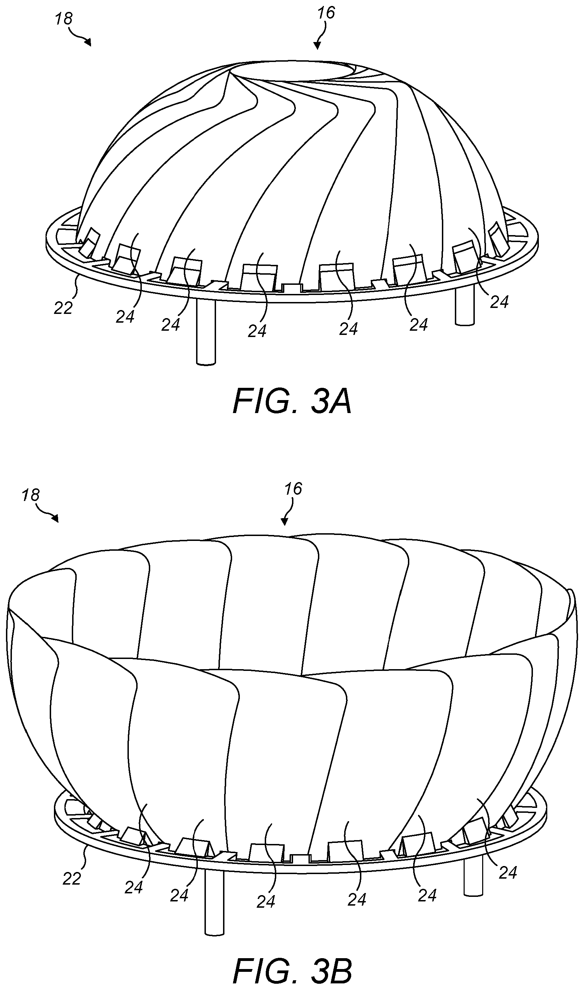

Figures 3A and 3B illustrate a specific embodiment of the actuable element 18 in a first and a second position respectively.

The actuable element 18 comprises a circular ring 22 and a plurality of hinged shape memory alloy plates 24 spaced around the perimeter of the ring 22. Each shape memory alloy plate 24 overlaps with the adjacent panel 24 in one circumferential direction around the ring 22 and underlaps with the adjacent shape memory alloy plate 24 in the opposite circumferential direction around the ring 24. In the first position, each shape memory alloy plate 24 is curved such that the plurality of shape memory alloy plates 24 form a dome shape having the aperture 16 in the apex of the dome, the aperture 16 being defined by the ends of the plurality of shape memory alloy plates 24. The first position may correspond to a low temperature position of the actuable element 18.

In the second position, which may correspond to a high temperature position of the actuable element 18, each shape memory alloy plate 24 is deformed such that each shape memory alloy plate 24 is unfurled with respect to the first position, i.e. each shape memory alloy plate 24 deflects in an outward radial direction with respect to the ring 24. The deflection/deformation of the shape memory alloy plates 24 occurs due to a temperature induced phase transformation, i.e. the shape memory effect. The plurality of shape memory alloy plates 24 form a bowl shape with the aperture 16 having a larger size than in the first position, the aperture 16 again being defined by the ends of the plurality of shape memory alloy plates 24.

The skilled person will appreciate that the plurality of shape memory alloy plates 24 may move from the first position to the second position in response to an increase in temperature, or move from the second position to first position in response to a decrease in temperature. Moreover, the skilled person will appreciate that the shape memory alloy plates 24 are not limited to being arranged in the first position and the second position, but may take intermediate positions or further deform to adjust the size of the aperture 16.

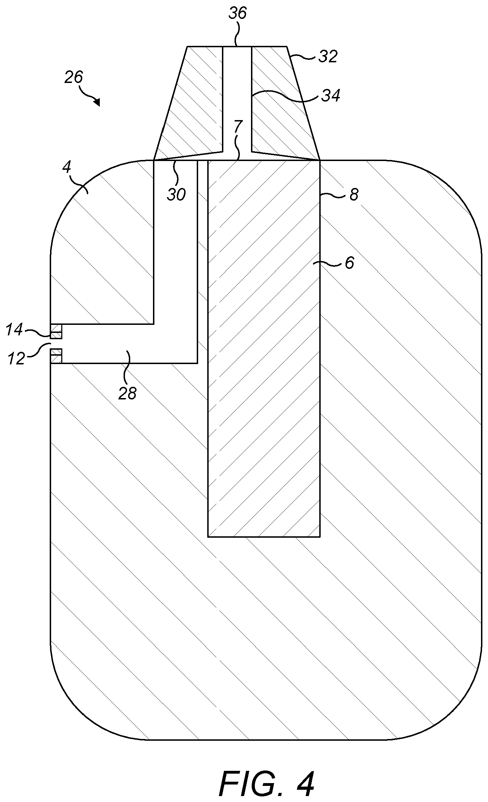

Figure 4 illustrates an aerosol generating device 26 according to another embodiment of the invention. The features of the aerosol generating device 26 generally correspond to those of aerosol generating device 2, except the aerosol generating device 26 comprises a first airflow passage 28 with an alternative configuration, and further comprises a mouthpiece 32 disposed adjacent to the insertion opening 7 in the housing 4.

The first airflow passage 28 extends from the air inlet 12 in the exterior of the housing 4 to an air outlet 30 adjacent the insertion opening 7 in the housing 4. The first airflow passage 28 is arranged to transport air from the air inlet 12, through the aerosol generating device 26, and out of the air outlet 30 to mix with aerosol emerging from the heating chamber 6. The flow of air along the first airflow passage 28 may be controlled using the valve 12 in accordance with the temperature, as previously described. For example, as the temperature of the valve 12 is increased, the valve 12 may increase the size of the aperture 16 such that a greater flow of cool air from the external environment is supplied in the vicinity of the insertion opening 7 to mix with hot aerosol emerging through the insertion opening 7 in the heating chamber 6.

In this embodiment, the aerosol substrate 8 is wholly contained within the aerosol generating device 26 during use. Thus, the aerosol substrate 8 is not received in the mouth of the user during use (i.e. an end portion of the aerosol substrate 8 does not act as a mouthpiece for inhaling the generated aerosol). Instead, the user inhales aerosol via the mouthpiece 3 which is positioned adjacent to the air outlet 30 and the hole in the housing 7.

The mouthpiece 32 comprises a vapour passage 34 arranged to transport the aerosol generated in the heating chamber 8 through the mouthpiece 32 to an inhalation outlet 36. The vapour passage 34 is supplied with the aerosol through the insertion opening 7 in the housing. The vapour passage 34 is also configured to receive air supplied from the external environment via the first airflow passage 28. In particular, the vapour passage 34 is supplied with air through the air outlet 30, with the level of airflow determined by size of the aperture 14. In this way, in use, air and vapour is mixed within the vapour passage 34, and the user inhales a combination of air supplied via the first air flow passage 28 and vapour supplied from the heating chamber 6.

The skilled person will appreciate that the air outlet 30 may be located in alternative positions depending on the ventilation requirements of the aerosol generating device 26. For example, in alternative embodiments, the first airflow passage 28 may extend into the mouthpiece 32. In other examples, the vapour passage 34 may extend into the housing 4. Moreover, the first airflow passage 28 may split into a plurality of airflow passages which each supply air to mix with aerosol emerging from the heating chamber 6.

It will also be appreciated that, in other examples, aerosol generating devices 2 and 40 may comprise a mouthpiece.

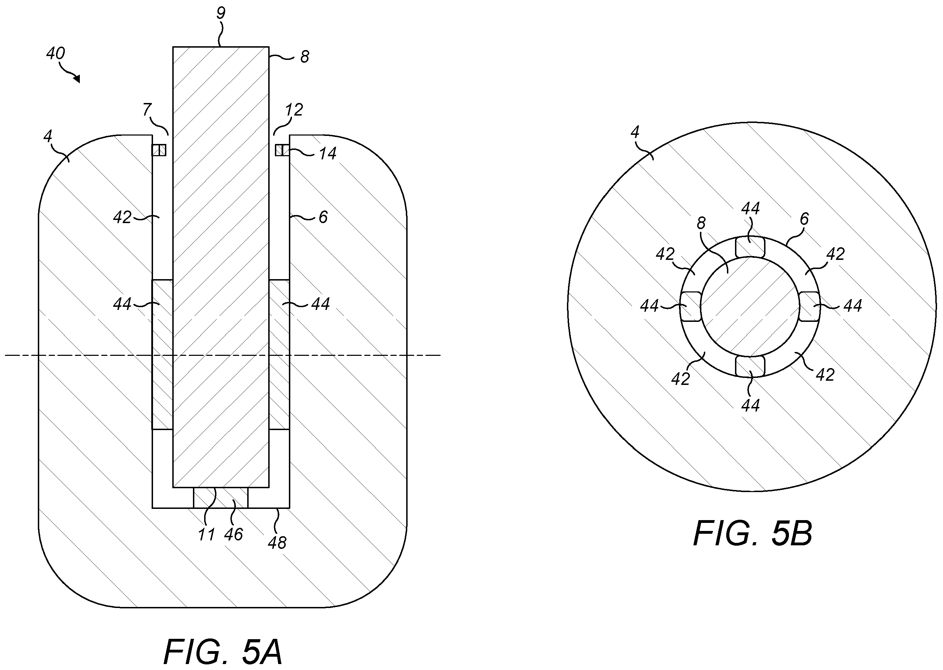

Figures 5A and 5B illustrate an aerosol generating device 40 according to another embodiment of the invention. Figures 5A and 5B show the device 40 in a first cross-sectional plane and a second perpendicular cross-sectional plane respectively. The dashed line across Figure 5A indicates the position of the cross-sectional plane of Figure 5B.

The features of the aerosol generating device 40 generally correspond to those of aerosol generating device 2, except the aerosol generating device 40 comprises a first airflow passage 42 with an alternative configuration, and further comprises a plurality of engagement members 44 and a support member 46.

The first airflow passage 42 is provided by a gap defined between the wall of the heating chamber 6 and the aerosol substrate 8. The first air flow passage 42 extends from the insertion opening 7 in the exterior of the housing 4, along the length of the heating chamber 6, and to a longitudinal end 48 of the heating chamber 6 that is opposite the insertion opening 7. In other words, the first air flow passage 42 surrounds, or at least partially surrounds, the aerosol substrate 8 received within the heating chamber 6, and is arranged to transport air from the external environment, along the length of the aerosol substrate 8, and to the second end 11 of the aerosol substrate 8.

The air inlet 12 is located at the insertion opening 7 and, more specifically, the air inlet 12 corresponds to an outer portion of the insertion opening 7 that is adjacent to the exterior of the housing 4. That is, the air inlet 12 is formed as a ring that surrounds, or at least partially surrounds, the aerosol substrate 8 received within the heating chamber 6. In other words, the air inlet 12 is provided by a gap defined between the aerosol substrate 8 and the exterior of the housing 4.

In this example, the valve 14 is located below the air inlet 12, i.e. the valve 14 does not lie adjacent to the exterior of the housing 4. However, in other examples, the valve 14 may be located at the air inlet 12, i.e. adjacent to the exterior of the housing 4. The valve 14 operates as described for the previous embodiments, except the aperture 16 is a ring shaped aperture that surrounds, or at least partially surrounds, the aerosol substrate 8. In other words, the aperture 16 is defined by the gap between the valve 14 and the aerosol substrate 8. The valve 14 is configured to restrict air flow into the insertion opening 7 in the heating chamber 6, around the aerosol substrate 8.

A plurality of engagement members 44 are disposed between the wall of the heating chamber 6 and the aerosol substrate 8. In this example, there are four engagement members 44 that are evenly spaced around the heating chamber 6. However, it will be appreciated that the number and arrangement of engagement members 44 may be varied. The engagement members 44 act as ribs which extend away from the wall of the heating chamber 6 to engage with the aerosol substrate 8 received within the heating chamber 6. The engagement members 44 ensure that the aerosol substrate 8 is held within the heating chamber 6 without contacting the wall of the heating chamber 6, thereby defining the gap between the aerosol substrate 8 and the wall of the heating chamber 6 which acts as the first air flow passage 42. The engagement members 44 may also act to provide compressive force to the aerosol substrate 8 which improves heating transfer to and/or within the aerosol substrate 8.

A support member 46 is located at the longitudinal end 48 of the heating chamber 6, opposite to the insertion opening 7. The support member 46 is operable to interface with the second end 11 of the aerosol substrate 8 such that the mouth end 11 is displaced away from the longitudinal end 48 of the heating chamber 6. Thus, air that has travelled along the first air flow passage 42 is able to enter the aerosol substrate 8 through the second end 11 of the aerosol substrate 8.

## Claims

1. An aerosol generating device (2), comprising:
a housing (4);
a heating chamber (6) which is tubular and arranged to receive a rod of aerosol substrate (8), the heating chamber operable to heat the aerosol substrate to generate an aerosol; and
a first airflow passage (10) arranged to transport air from a first air inlet (12) in the housing into or through the aerosol generating device,
**characterized in that**
the first airflow passage comprises a valve (14) having an aperture (16), and
wherein a size of the aperture is adjustable to alter an airflow through the first airflow passage.

2. The aerosol generating device (2) of claim 1, wherein the valve is configured to adjust the size of the aperture as a function of temperature.

3. The aerosol generating device (2) of any preceding claim, wherein the valve is configured such that the aperture is always at least partially open.

4. The aerosol generating device (2) of claim 1 of claim 2, wherein the valve is configured such that the aperture closes below a threshold temperature.

5. The aerosol generating device (2) of any preceding claim, wherein the valve comprises a shape memory alloy in which the aperture is located, the shape memory alloy being configured to change shape as a function of temperature to adjust the size of the aperture.

6. The aerosol generating device (2) of claim 5, wherein the valve comprises a flexible rim (20) surrounding the shape memory alloy, the flexible rim being configured to expand or contract to accommodate the change in shape of the shape memory alloy.

7. The aerosol generating device (2) of any preceding claim, wherein the aperture is circular, and wherein the radius of the aperture is adjustable to alter the airflow through the first airflow passage.

8. The aerosol generating (2) device of any preceding claim, wherein the valve is located at the first air inlet.

9. The aerosol generating device (2) of any preceding claim, wherein the first air inlet is at an insertion opening for the aerosol substrate.

10. The aerosol generating device (2) of any preceding claim, wherein the first airflow passage is arranged to transport air from the first air inlet in the housing to the heating chamber.

11. The aerosol generating device (2) of claims 1 to 8, wherein the first airflow passage is arranged to transport air from the first air inlet in the housing through the aerosol generating device to mix with aerosol emerging from the heating chamber.

12. The aerosol generating device (2) of any preceding claim, further comprising a second air flow passage arranged to transport air from a second air inlet in the housing to the heating chamber.

13. The aerosol generating device of any preceding claim further comprising an actuator (18), wherein the size of the aperture is adjustable by the actuator.

14. The aerosol generating device (2) of claim 13, wherein the actuator comprises one of:
a magnetic actuator;
an electrical actuator; or
an electro-mechanical actuator.

## Patentansprüche

1. Aerosolerzeugungsvorrichtung (2), umfassend:
Ein Gehäuse (4);
eine Heizkammer (6), die rohrförmig und eingerichtet ist, ein Aerosolsubstrat (8) aufzunehmen, wobei die Heizkammer betreibbar ist, das Aerosolsubstrat zu erhitzen, um ein Aerosol zu erzeugen; und
einen ersten Luftstromkanal (10), der so angeordnet ist, dass er Luft von einem ersten Lufteinlass (12) im Gehäuse in oder durch die Aerosolerzeugungsvorrichtung transportiert, **dadurch gekennzeichnet, dass** der erste Luftstromkanal ein Ventil (14) mit einer Öffnung (16) aufweist, und
wobei die Größe der Öffnung einstellbar ist, um den Luftstrom durch den ersten Luftstromkanal zu verändern.

2. Aerosolerzeugungsvorrichtung (2) nach Anspruch 1, wobei das Ventil so konfiguriert ist, dass es die Größe der Öffnung als Funktion von Temperatur anpasst.

3. Aerosolerzeugungsvorrichtung (2) nach irgendeinem vorhergehenden Anspruch, wobei das Ventil so konfiguriert ist, dass die Öffnung immer zumindest teilweise geöffnet ist.

4. Aerosolerzeugungsvorrichtung (2) nach Anspruch 1 oder Anspruch 2, wobei das Ventil so konfiguriert ist, dass sich die Öffnung unterhalb einer Schwellentemperatur schließt.

5. Aerosolerzeugungsvorrichtung (2) nach irgendeinem vorhergehenden Anspruch, wobei das Ventil eine Formgedächtnislegierung umfasst, in der sich die Öffnung befindet, wobei die Formgedächtnislegierung so konfiguriert ist, dass sie ihre Form als Funktion von Temperatur ändert, um die Größe der Öffnung anzupassen.

6. Aerosolerzeugungsvorrichtung (2) nach Anspruch 5, wobei das Ventil einen flexiblen Rand (20) umfasst, der die Formgedächtnislegierung umschließt, wobei der flexible Rand so konfiguriert ist, dass er sich ausdehnen oder zusammenziehen kann, um die Formänderung der Formgedächtnislegierung aufzunehmen.

7. Aerosolerzeugungsvorrichtung (2) nach irgendeinem vorhergehenden Anspruch, wobei die Öffnung kreisförmig ist und wobei der Radius der Öffnung einstellbar ist, um den Luftstrom durch den ersten Luftstromkanal zu verändern.

8. Aerosolerzeugungsvorrichtung (2) nach irgendeinem vorhergehenden Anspruch, wobei sich das Ventil am ersten Lufteinlass befindet.

9. Aerosolerzeugungsvorrichtung (2) nach irgendeinem vorhergehenden Anspruch, wobei sich der erste Lufteinlass an einer Einschuböffnung für das Aerosolsubstrat befindet.

10. Aerosolerzeugungsvorrichtung (2) nach irgendeinem vorhergehenden Anspruch, wobei der erste Luftstromkanal so angeordnet ist, dass er Luft vom ersten Lufteinlass im Gehäuse zur Heizkammer transportiert.

11. Aerosolerzeugungsvorrichtung (2) nach den Ansprüchen 1 bis 8, wobei der erste Luftstromkanal so angeordnet ist, dass er Luft vom ersten Lufteinlass im Gehäuse durch die Aerosolerzeugungsvorrichtung transportiert, um sie mit dem aus der Heizkammer austretenden Aerosol zu vermischen.

12. Aerosolerzeugungsvorrichtung (2) nach irgendeinem vorhergehenden Anspruch, ferner einen zweiten Luftstromkanal umfassend, der so angeordnet ist, dass er Luft von einem zweiten Lufteinlass im Gehäuse zur Heizkammer transportiert.

13. Aerosolerzeugungsvorrichtung (2) irgendeiner Aerosolerzeugungsvorrichtung nach irgendeinem vorhergehenden Anspruch, ferner einen Aktor (18) umfassend, wobei die Größe der Öffnung durch den Aktor einstellbar ist.

14. Aerosolerzeugungsvorrichtung (2) nach Anspruch 13, wobei der Aktor eines der folgenden Elemente umfasst:
Einen magnetischen Aktor;
einen elektrischen Aktor; oder
einen elektromechanischen Aktor.

## Revendications

1. Dispositif de génération d'aérosol (2), comprenant :
un boîtier (4) ;
une chambre de chauffe (6) de forme tubulaire, et agencée pour recevoir une tige de substrat d'aérosol (8), la chambre de chauffe pouvant être actionnée pour chauffer le substrat d'aérosol afin de produire un aérosol ; et
un premier passage de flux d'air (10) agencé pour transporter de l'air d'une première entrée d'air (12) dans le boîtier dans, ou à travers, le dispositif de génération d'aérosol,
**caractérisé en ce que**
le premier passage de flux d'air comprend une soupape (14) possédant une ouverture (16), et
une taille de l'ouverture pouvant être ajustée afin de modifier un flux d'air dans le premier passage de flux d'air.

2. Dispositif de génération d'aérosol (2) selon la revendication 1, la soupape étant configurée pour ajuster la taille de l'ouverture en fonction de la température.

3. Dispositif de génération d'aérosol (2) selon une quelconque des revendications précédentes, la soupape étant configurée de sorte que l'ouverture reste toujours au moins partiellement ouverte.

4. Dispositif de génération d'aérosol (2) selon la revendication 1 ou la revendication 2, la soupape étant configurée de sorte que l'ouverture se ferme au-dessous d'une température seuil.

5. Dispositif de génération d'aérosol (2) selon une quelconque des revendications précédentes, la soupape comprenant un alliage à mémoire de forme dans lequel est située l'ouverture, l'alliage à mémoire de forme étant configuré pour modifier la forme en fonction de la température pour ajuster la taille de l'ouverture.

6. Dispositif de génération d'aérosol (2) selon la revendication 5, la soupape comprenant un rebord flexible (20) entourant l'alliage à mémoire de forme, le rebord flexible étant configuré pour se détendre ou se contracter afin de tenir compte de la modification de la forme de l'alliage à mémoire de forme.

7. Dispositif de génération d'aérosol (2) selon une quelconque des revendications précédentes, l'ouverture étant circulaire, et le rayon de l'ouverture étant ajustable afin de modifier le débit d'air à travers le premier passage de flux d'air.

8. Dispositif de génération d'aérosol (2) selon une quelconque des revendications précédentes, la soupape étant située à la première entrée d'air.

9. Dispositif de génération d'aérosol (2) selon une quelconque des revendications précédentes, la première entrée d'air étant une ouverture d'insertion pour le substrat d'aérosol.

10. Dispositif de génération d'aérosol (2) selon une quelconque des revendications précédentes, le premier passage de flux d'air étant agencé pour transporter de l'air de la première entrée d'air, dans le boîtier, à la chambre de chauffe.

11. Dispositif de génération d'aérosol (2) selon les revendications 1 à 8, le premier passage de flux d'air étant agencé pour transporter de l'air depuis la première entrée d'air, dans le boîtier, à travers le dispositif de génération d'aérosol pour le mélanger avec l'aérosol provenant de la chambre de chauffe.

12. Dispositif de génération d'aérosol (2) selon une quelconque des revendications précédentes, comprenant en outre un deuxième passage de flux d'air agencé pour transporter de l'air d'une deuxième entrée d'air, dans le boîtier, à la chambre de chauffe.

13. Dispositif de génération d'aérosol selon une quelconque des revendications précédentes, comprenant en outre un actionneur (18), la taille de l'ouverture pouvant être ajustée par l'actionneur.

14. Dispositif de génération d'aérosol (2) selon la revendication 13, l'actionneur étant un des suivants :
un actionneur magnétique ;
un actionneur électrique ; ou
un actionneur électromécanique.
